# FASCICULE DE BREVET EUROPEEN

(11) **EP 3 034 407 B1**
(45) Date de publication et mention de la délivrance du brevet: **06.09.2017**
(21) Numéro de dépôt: 14307053.0
(22) Date de dépôt: 16.12.2014
(51) Int. Cl.: B64D 25/00, B60R 21/23, B64G 1/62

(54) **Système de protection à airbag**
Airbag-Schutzsystem
Airbag protection system

(43) Date de publication de la demande: 22.06.2016
(73) Titulaire: Airbus (S.A.S.), 31700 Blagnac (FR)
(72) Inventeur: Geneste, Jean-François, 31200 TOULOUSE (FR)
(74) Mandataire: Ipside

(56) Documents cités:
- EP-A1- 0 861 780
- EP-A1- 1 477 372
- WO-A1-2011/014152
- WO-A1-2013/088285
- BR-A2- PI0 802 892
- DE-A1-102008 062 264
- DE-A1-102011 108 127
- DE-C1- 19 837 329
- FR-A1- 2 217 189
- FR-A5- 2 115 985
- US-A- 3 738 597
- US-A- 3 762 741
- US-A1- 2010 225 094
- US-A1- 2012 061 946
- US-B1- 6 607 166

## Description

### Domaine de l'invention

La présente invention se rapporte à un système de protection à coussin gonflable communément dénommé airbag.

Le système de protection peut notamment être utilisé dans tous les domaines d'activités où surviennent des accidents générées par une forte décélération d'un véhicule due à une chute ou un impact violent contre un obstacle fixe ou mobile.

L'invention trouve par exemple une application lors de l'atterrissage d'un hélicoptère en permettant, en cas de réception d'urgence, un atterrissage plus sûr et limitant les dommages causés à l'hélicoptère et surtout à ses passagers.

### Etat de la technique

Il est connu de l'état de la technique le recours à des airbags dans les véhicules pour s'interposer, lors du leur déploiement, entre un passager et l'obstacle que le passager pourrait heurter.

Pour illustrer un exemple connu du document WO2011/014152, on peut citer le cas des hélicoptères qui disposent d'airbags, appelés flotteurs, disposés à proximité des moyens habituels d'atterrissage et qui sont intégrés à l'hélicoptère. Les flotteurs sont gonflés préalablement à l'atterrissage de l'hélicoptère pour venir en remplacement des systèmes d'atterrissage, lorsque ceux-ci sont déficients.

De tels flotteurs permettent avantageusement de régler le problème de la réception d'urgence d'hélicoptères en permettant à l'hélicoptère endommagé de se poser en évitant d'entrer en contact directement et brutalement avec le sol.

Cependant, lors d'un impact à composante principale verticale, de tels airbags ne peuvent éviter que le moteur et les pales de l'hélicoptère, sous la force de l'impact, s'effondrent sur la cabine en l'écrasant ce qui aurait pour effet de provoquer des dommages significatifs, voire irrémédiables, sur l'hélicoptère, et de blesser les passagers dans la cabine. D'autres exemples d'airbag sont divulgués par le document DE 10 2008 062 264 A1 (industrie automobile) et EP 0 861 780 A1 (industie spatiale).

### Exposé de l'invention

La présente invention a pour but de pallier aux inconvénients des systèmes de protection proposés par l'art antérieur, notamment à ceux exposés ci-avant, en proposant un système de protection qui soit adaptable aux problématiques de tout type de véhicules (spatiaux, terrestre), résistant aux forces de compression s'exerçant sur lui, sans pénalisation du poids du véhicule.

Ainsi, il est proposé selon la présente invention un système de protection selon la revendication 1. Ledit système comporte un coussin gonflable relié à des moyens de gonflage aptes et destinés à être activés pour gonfler ledit coussin lors et/ou en prévision d'un impact.

Le coussin se présente sous une forme générale sensiblement annulaire dans un état gonflé/lorsqu'il est gonflé.

De part sa forme générale sensiblement annulaire, le coussin gonflable présente un volume moindre que les coussins gonflables existants, et par conséquent une masse réduite.

Le système de protection selon l'invention présente ainsi avantageusement une géométrie qui lui permet de résister à des forces de pression externes qui seraient exercées sur lui.

Un tel système de protection est avantageusement destiné à être intégré dans un hélicoptère, au niveau d'une sonde spatiale ou encore au niveau d'un aéronef.

Suivant des modes de réalisation préférés, l'invention répond en outre aux caractéristiques suivantes, mises en oeuvre séparément ou en chacune de leurs combinaisons techniquement opérantes.

Selon l'invention, le coussin gonflable présente une section transversale en forme de T dans un état gonflé.

De part leur section transversale en T, les anneaux gonflables présentent un volume moindre que des anneaux gonflables de section transversale typiquement circulaire, et par conséquent une masse réduite, principalement du fait qu'à pression égale de fluide interne les anneaux gonflables de section transversale en T ont un volume moindre.

Selon un mode de réalisation particulier, de l'invention, le coussin gonflable est réalisé dans une structure à fils entrecroisés.

Selon des modes particuliers de l'invention, le système de protection comportant une pluralité de coussins gonflables et des éléments de liaison, deux coussins gonflables étant reliés par au moins un moyen de liaison de sorte à former un maillage.

Selon un mode particulier de l'invention, un élément de liaison est un élément de liaison gonflable.

Selon un mode particulier de l'invention, un coussin gonflable et un élément de liaison adjacent présentent chacun un volume interne, lesdits au moins deux volumes internes communiquant entre eux.

Selon une variante particulière de l'invention, tous les coussins gonflables et tous les éléments de liaison présentent chacun un volume interne, tous les volumes communiquant entre eux.

Selon un mode particulier de l'invention, le système de protection comporte deux moyens de gonflage configurés pour gonfler de manière indépendante au moins deux coussins gonflables.

Selon un mode particulier de l'invention, un coussin gonflable présente un volume interne divisé en deux chambres indépendantes se gonflant/dégonflant sélectivement l'une par rapport à l'autre.

L'invention est également relative à un hélicoptère. Ledit hélicoptère comporte au moins un système de protection suivant au moins l'un de ses modes ou caractéristiques de réalisation s'étendant, à l'état gonflé, depuis une face interne d'une cabine, de préférence circonférentiellement.

Une telle configuration permet, en cas d'impact, notamment à composante verticale, de limiter l'écrasement de la cabine. On obtient en outre un effet enveloppant qui permet de diminuer le risque de contact direct entre des passagers et la face interne de la cabine.

L'invention est également relative à une sonde spatiale. Ladite sonde spatiale comporte au moins un système de protection suivant au moins l'un de ses modes ou caractéristiques de réalisation s'étendant, à l'état gonflé, depuis une face externe.

Une telle configuration permet de freiner et d'amortir la sonde spatiale lors de son atterrissage, les coussins gonflables étant conçus pour absorber l'énergie lors de l'impact à l'atterrissage.

Le système de protection, de part la forme générale sensiblement annulaire des coussins gonflables, permet avantageusement d'embarquer à bord de la sonde spatiale un volume moindre de fluide, ce qui allège la masse totale de ladite sonde spatiale.

L'invention est également relative à un aéronef. Ledit aéronef comporte au moins un système de protection suivant au moins l'un de ses modes ou caractéristiques de réalisation s'étendant, à l'état gonflé, depuis un radome ou un cône de réacteur.

Un tel positionnement permet de stopper les éventuels projectiles en vol tels que les oiseaux soit pour maintenir le rôle aérodynamique du radome et protéger le radar situé dans le radome soit pour protéger les moteurs.

### Présentation des figures

L'invention sera maintenant plus précisément décrite dans le cadre de modes de réalisation préférés, qui n'en sont nullement limitatifs, représentés sur les figures 1 à 5, dans lesquelles :
la figure 1 illustre une vue schématique en perspective d'un hélicoptère équipé d'un système de protection, représenté en pointillé, selon un mode de réalisation de l'invention ;
la figure 2 illustre une vue schématique de coté de l'hélicoptère de la figure 1 ;
la figure 3 illustre une représentation schématique d'un système de protection appliqué à la protection d'une sonde spatiale, selon un mode de réalisation de l'invention ;
la figure 4 illustre une représentation schématique d'un système de protection appliqué à la protection d'une sonde spatiale, selon un autre mode de réalisation de l'invention ;
la figure 5 illustre une représentation schématique d'un système de protection appliqué à la protection d'un radome d'un aéronef, selon un mode de réalisation de l'invention.

### Description détaillée de modes de réalisation de l'invention

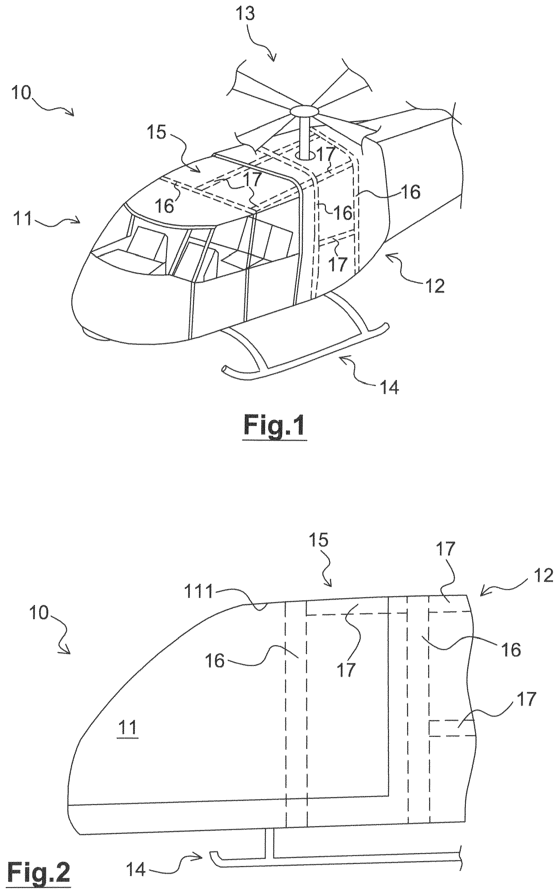

Des exemples de systèmes de protection selon l'invention sont à présent décrits pour trois applications distinctes et illustrés au travers des figures 1 à 5.

### Système de protection 15 pour hélicoptère (figures 1 et 2)

De manière classique, un hélicoptère 10 est essentiellement formé:
- d'une cabine 11 pour la réception d'un pilote et de passagers,
- d'un fuselage 12,
- d'une voilure 13 et d'un groupe motopropulseur associé,
- de moyens d'atterrissage 14.

Il est habituel de prévoir diverses protections contre les impacts que l'hélicoptère et les passagers pourraient subir. En particulier, l'hélicoptère 10 est généralement pourvu de moyens de sécurité des passagers, tels que des harnais de sécurité (non représentés).

Selon l'invention, il est prévu un système de protection 15 comprenant au moins un coussin gonflable 16, aussi dénommé airbag. Ce système de protection 15 est avantageusement prévu pour s'interposer, lors de son déploiement, entre les passagers et le fuselage 12 qui pourrait venir heurter les passagers lors d'un impact au sol.

Dans un exemple préféré de réalisation, le système de protection 15 comporte une pluralité de coussins gonflables 16.

Dans l'exemple des figures 1 et 2, par souci de clarté, seuls trois coussins gonflables 16, représentés en pointillé, sont illustrés.

Chaque coussin gonflable 16 présente une forme générale sensiblement annulaire à l'état gonflé et présente un volume interne.

A l'état de repos, c'est-à-dire avant déclenchement du gonflage, chacun des coussins gonflables 16 se présente sous la forme d'une bande s'étendant, de préférence, circonférentiellement depuis une face interne 111 de la cabine 11. Chaque coussin gonflable 16, ainsi replié, présente une épaisseur relativement faible afin ne pas réduire le volume de la cabine 11.

De préférence, chaque coussin gonflable 16 est agencé à proximité d'une lisse formant une partie de la structure du fuselage 12.

Un coussin gonflable 16 est prévu pour être gonflé par l'introduction d'un fluide, dans son volume intérieur, via des moyens de gonflage (non représentés). Ces moyens de gonflage sont classiques en eux même dans leur forme et dans leur fonctionnement et ne sont pas décrits plus en détail dans la présente description.

Dans un exemple de réalisation, le coussin gonflable 16 est gonflé à l'air, celui-ci présentant une masse volumique faible, mais il peut être également envisagé du remplir avec d'autre fluide, tel que par exemple de l'hélium ou du diazote.

Dans un mode de réalisation d'un coussin gonflable 16, ledit coussin gonflable est réalisé à partir d'une structure à fils entrecroisés, de type treillis tissé, dont le maillage est choisi de telle sorte à résister aux forces de pression internes. Ladite structure est recouverte par un revêtement étanche au fluide de gonflage.

Dans un autre mode de réalisation d'un coussin gonflable 16, ledit coussin gonflable 16 est réalisé à partir d'une structure à fils entrecroisés, de type treillis tissé, à l'intérieur de laquelle sont injectées des vapeurs polymères qui se déposent sur la structure et se polymérisent sous la forme d'un film très fin de sorte à obturer des portions ajourées de la structure à fils entrecroisés.

Dans les deux modes de réalisation précédents, la structure à fils entrecroisés comporte par exemple des fils en aramide, tels que le Kevlar®.

De telles structures permettent avantageusement de ne pas alourdir exagérément l'hélicoptère en termes de masse. Selon l'invention, dans un état gonflé, le coussin gonflable 16 présente, selon un plan passant par un axe de révolution du coussin gonflable 16, une section transversale en forme de T, avec une tête et un pied.

Pour obtenir une section transversale en forme en T, le coussin gonflable 16, initialement généralement de section transversale circulaire ou ovale peut être déformé en forme de T par couture ou piquage de fils, par exemple en Kevlar®.

Avantageusement, une telle section transversale de coussin gonflable 16 permet, par rapport à une section transversale classique de coussin gonflable 16, circulaire ou ovale, une meilleure tenue à la compression pour un volume interne gonflé plus restreint et donc une masse plus faible.

De préférence, le pied du T présente une longueur la plus importante possible. La longueur du pied est fonction de la pression extérieure exercée sur le coussin gonflable 16, sachant que de manière générale, plus la longueur du pied du T est importante et meilleure sera sa résistance à la pression extérieure exercée.

La tête permet avantageusement une augmentation d'une surface de contact du coussin gonflable 16 avec le fuselage 12. Dans un exemple de dimensionnement, la tête présente une largeur sensiblement égale a une épaisseur du pied du T.

Dans un mode de réalisation du coussin gonflable 16, le volume interne du coussin gonflable 16 est divisé en au moins deux chambres indépendantes. Les au moins deux chambres indépendantes se gonflent et/ou se dégonflent sélectivement l'une par rapport à l'autre, par exemple au moyen d'une vanne. Ainsi, pour éviter un effondrement de la voilure 13 contre le fuselage 12 en cas d'impact à composante verticale, une solution consisterait à ne pas gonfler au moins une chambre de plusieurs coussins gonflables 16, de sorte à provoquer un effet de levier, permettant un basculement latéral de l'hélicoptère et projeter la voilure directement au sol.

Le système de protection 15 peut comporter en outre un élément de liaison 17 reliant deux coussins gonflables 16 adjacents. Chaque élément de liaison 17 est lié, au niveau de deux extrémités opposées, à deux coussins gonflables 16.

Les éléments de liaison 17 sont disposés de sorte à empêcher une déformation géométrique du système de protection 15 dans l'espace, sous l'effet de forces de pression externes exercées sur ledit système de protection 15, par exemple lors d'un impact à composante verticale.

Le choix du nombre d'éléments de liaison 17 et de leur positionnement entre la pluralité de coussins gonflables 16, de sorte à empêcher, dans le plan, une déformation géométrique du système de protection 15 sous l'effet de forces de pression externe exercées, est à la portée de l'homme du métier.

Dans une forme de réalisation, l'élément de liaison 17 relie les coussins gonflables 16 comme illustré sur les figures 1 et 2 de sorte à former un maillage.

Ainsi, lors du déploiement, les éléments de liaison 17 empêchent les coussins gonflables 16 de s'écarter l'un de l'autre.

Le système de protection 15 confère ainsi une protection contre les impacts longitudinaux et latéraux et/ou composés.

Dans l'exemple de la figure 1, par souci de clarté, seuls quatre éléments de liaison 17, représentés en pointillé, sont illustrés. Sur la figure 2, seuls trois éléments de liaison 17, représentés en pointillé, sont illustrés.

Chaque élément de liaison 17 est par exemple agencé à proximité d'un cadre formant avec les lisses la structure du fuselage 12.

Dans un mode préféré de réalisation, un élément de liaison 17 est un élément gonflable.

Dans une forme de réalisation, l'élément de liaison 17 est un élément tubulaire à l'état gonflé. L'élément de liaison 17 peut présenter une section transversale en forme de T

Dans une variante de réalisation, l'élément de liaison 17 est un élément de forme générale sensiblement annulaire à l'état gonflé. L'élément de liaison 17 peut présenter une section transversale en forme de T

Quelle que soit la forme de réalisation, à l'état de repos, chacun des éléments de liaison 17 se présente sous la forme d'une bande s'étendant, de préférence, depuis la face interne 111 de la cabine 11. Chaque élément de liaison 17, ainsi replié, présente une épaisseur relativement faible pour ne pas réduire le volume de la cabine 11.

Quelle que soit la forme de réalisation, les coussins gonflables 16 et les éléments de liaison 17 gonflables sont reliés de sorte que les volumes internes d'au moins un coussin gonflable 16 et un élément de liaison 17 gonflable adjacents communiquent entre eux et que le même fluide circule dans les volumes internes et les gonfle. Le gonflage est réalisé par un moyen de gonflage unique.

Préférentiellement, les coussins gonflables 16 et les éléments de liaison 17 gonflables sont configurés de sorte que les volumes internes de tous les coussins gonflables 16 et les éléments de liaison 17 gonflables communiquent entre eux de sorte que le même fluide circule dans tous les volumes internes et les gonfle. Ainsi, une entrée unique et un seul moyen de gonflage est nécessaire pour gonfler le système de protection 15.

Alternativement, chaque coussin gonflable 16 et chaque élément de liaison 17 gonflable est configuré pour être gonflé par un moyen de gonflage spécifique. Le déclenchement peut être dans ce cas plus sélectif et il peut être ainsi possible de gonfler en premier un ou des coussins gonflables 16 ou des éléments de liaison 17 du coté où l'impact intervient, puis de gonfler le reste des coussins gonflables 16 et des éléments de liaison 17 selon une séquence chronologique prédéterminée. Le déclenchement du gonflage est opéré dans des conditions prédéterminées.

Les conditions prédéterminées peuvent être par exemple la détection d'un impact ou d'une décélération supérieure à un seuil prédéterminé.

Ce déclenchement peut être commandé par une unité de commande (non représentée) associée à des moyens de détection et apte à interpréter les données de décélération ou toutes autres données.

De préférence, les moyens de détection sont automatiques ; ils peuvent par exemple faire appel à un accéléromètre. Les moyens de détection peuvent être propres au système de protection 15, ou bien ils peuvent faire partie de l'équipement de l'hélicoptère.

De façon alternative, le déclenchement peut être manuel, par appui sur un bouton poussoir par le pilote ou un passager.

Un armement initial du système de protection 15 peut être nécessaire pour autoriser le déclenchement ultérieur du gonflage et éviter un déclenchement intempestif. Cet armement peut être obtenu par exemple grâce à la fermeture d'un contacteur électrique intégré à un coussin gonflable 16.

Le système de protection 15 peut comporter des étuis dans lequel sont agencés les coussins gonflables 16 et les éléments de liaison 17 gonflables repliés, à l'état de repos.

Chaque étui est par exemple ancré sur le fuselage 12 de l'hélicoptère, au niveau des lisses et des cadres mais il pourrait en être autrement. L'ancrage des étuis sur une partie structurale de l'hélicoptère peut prendre différentes formes non décrites en détails ici mais à la portée de l'homme du métier.

Les coussins gonflables 16 et les éléments de liaison 17 sont enfermés dans un étui respectif pour ne pas être accessible et être protégés de l'environnement.

En variante, un seul étui pour l'ensemble des coussins gonflables 16 et éléments de liaison 17 est utilisé.

Dans une alternative de réalisation de l'invention, les coussins gonflables 16 et les éléments de liaison 17 peuvent se substituer en lieu et place aux lisses et cadres de la structure du fuselage 12. Les coussins gonflables 16 et les éléments de liaison 17 forment ainsi des pièces structurales de l'hélicoptère.

L'avantage d'une telle configuration réside dans la double fonction des coussins gonflables 16 et les éléments de liaison 17

D'une part, lesdits coussins gonflables 16 et lesdits éléments de liaison 17 sont configurés pour se maintenir dans un état gonflé, à une pression interne prédéterminée, de sorte à résister aux sollicitations de service (correspondant au chargement généré sur la structure du fuselage lors de son utilisation normale, par exemple, lors des différentes phases de vol, d'atterrissage, de décollage,...) auxquelles une pièce structurale en tant que telle est soumise en fonctionnement. Une maintenance de type surveillance des pressions peut être programmée.

D'autre part, en cas d'impact détecté par les moyens de détection, les coussins gonflables 16 et les éléments de liaison 17 peuvent agir comme airbag. La pression interne dans les coussins gonflables 16 et les éléments de liaison 17 est soudainement augmentée d'une pression prédéfinie pour permettre au fuselage 12 de résister audit impact. Il est aussi possible, le cas échéant, d'accepter des variations de volume des coussins gonflables.

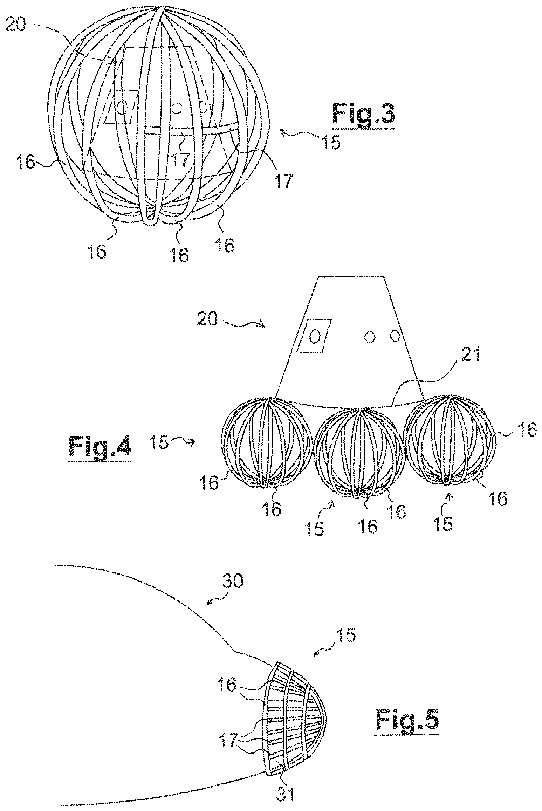

### Système de protection 15 pour sonde spatiale (figures 3 et 4)

Le système de protection 15 est également applicable à une sonde spatiale 20, comme illustré sur les figures 3 et 4, principalement pour amortir l'impact et réaliser une fonction de freinage lors de son atterrissage.

Dans un exemple d'agencement, le système de protection 15 présente un assemblage de coussins gonflables 16, chacun de forme générale sensiblement annulaire dans un état gonflé, agencés de sorte à former des méridiens de révolution d'une sphère.

Par méridien, on entend un cercle périphérique rejoignant les sommets axiaux d'une sphère.

Tout ou partie des volumes internes des coussins gonflables 16 peuvent être mis en relation les uns avec les autres et être gonflés par un seul moyen de gonflage. En variante, les volumes internes des coussins gonflables 16 ne sont pas mis en relation les uns avec les autres et sont gonflés indépendamment les uns des autres, chacun par un moyen de gonflage spécifique.

Dans une variante de réalisation, pour consolider cet agencement, les coussins gonflables 16 sont reliés entre eux par des éléments de liaison 17 gonflables, par exemple agencés de sorte à matérialiser au moins un parallèle d'une sphère. Ceci donne par exemple un maillage trapézoïdal en surface de la sphère.

Les éléments de liaison 17 gonflables peuvent être mis en relation avec les coussins gonflables pour être gonflés par le même moyen de gonflage.

A l'état de repos, chacun des coussins gonflables 16, et des éléments de liaison 17 si présents, se présente sous la forme d'une bande placée au niveau d'une face externe de la sonde spatiale.

A l'état gonflé, l'agencement des coussins gonflables 16, éventuellement des éléments de liaison 17, entoure la sonde spatiale, comme illustré sur la figure 3.

Il est clair que le système de protection 15 peut également comporter une pluralité de tels assemblages disposés sur au moins une face externe de la sonde spatiale, tel qu'illustré sur la figure 4.

Le gonflage du système de protection 15, selon au moins l'un des modes de réalisation précédemment décrit, est déclenché par un détecteur de proximité.

Pour réaliser la fonction de freinage et d'amortissement de la sonde spatiale 20 lors de l'atterrissage, les coussins gonflables 16 (et éventuellement les éléments de liaison 17 gonflables, si ils sont présents) du système de protection 15 sont conçus pour absorber l'énergie lors de l'impact.

Selon un aspect avantageux, l'énergie pour amortir la sonde spatiale 20 peut être absorbée par l'un des moyens ci-après :
- des évents ménagés dans les coussins de gonflages (et éventuellement les éléments de liaison 17 gonflables, s'ils sont présents), ou une valve de limitation de pression, qui permettent l'évacuation partielle du fluide pendant l'amortissement de l'impact,
- les coussins de gonflages (et éventuellement les éléments de liaison 17 gonflables, s'ils sont présents) peuvent être fabriqués tout ou partie en tissu poreux, ce qui permet également l'évacuation partielle du fluide pendant l'amortissement de l'impact,
- les coussins de gonflages (et éventuellement les éléments de liaison 17 gonflables, s'ils sont présents) peuvent comprendre une portion déformable, apte à se déformer élastiquement ou plastiquement pour absorber l'énergie.

Contrairement aux systèmes de protection existants, consistant en des sphères pleines qui sont remplies d'une grande quantité de fluide en vue de l'atterrissage, le système de protection 15, selon au moins l'un des modes de réalisation précédemment décrits, nécessite avantageusement un volume moindre de fluide pour une protection identique, par conséquent un temps de gonflage réduit et donc un temps de réaction écourté. Le volume de fluide à embarquer à bord de la sonde spatiale étant réduit, la masse de ladite sonde spatiale est également réduite ainsi que la quantité de carburant nécessaire pour le transport de la sonde spatiale.

### Système de protection 15 pour aéronef (figure 5)

Le système de protection 15 est également applicable à un aéronef 30, principalement pour résister aux impacts des oiseaux, que ce soit au niveau d'un radome ou d'un cône de réacteur.

Dans un exemple d'agencement, le système de protection 15 présente un assemblage de coussins gonflables 16, chacun de forme généralement sensiblement annulaire dans un état gonflé, et des éléments de liaison 17 gonflables. Les coussins gonflables 16 présentent des diamètres décroissants et sont reliés entre eux par des éléments de liaison 17 gonflables de sorte à matérialiser un cône ou un tronc de cône.

Tout ou partie des volumes internes des coussins gonflables 16 et des éléments de liaison 17 gonflables peuvent être mis en relation les uns avec les autres et être gonflés par un seul moyen de gonflage. En variante, les volumes internes des coussins gonflables 16 et des éléments de liaison 17 gonflables ne sont pas mis en relation les uns avec les autres et sont gonflés indépendamment les uns des autres, chacun par un moyen de gonflage spécifique.

A l'état de repos, chacun des coussins gonflables 16 et des éléments de liaison 17 se présente sous la forme d'une bande placée au niveau d'une face externe du radome ou du cône d'un réacteur.

A l'état gonflé, les coussins gonflables 16 et les éléments de liaison 17 entourent le radome, comme illustré sur la figure 5, ou le cône d'un réacteur.

Le système de protection 15 est réalisé de sorte à former un filet à mailles réduites, c'est-à-dire dont les mailles sont suffisamment resserrées pour bloquer le passage des oiseaux.

Lorsque le système de protection 15 se positionne au niveau du cône d'un réacteur, vu qu'il se présente sous la forme d'un filet à mailles, il perturbe avantageusement peu l'arrivée d'air dans les moteurs.

Le gonflage du système de protection 15, selon au moins l'un des modes de réalisation précédemment décrits, est déclenché par un détecteur de proximité.

La description ci-avant illustre clairement que par ses différentes caractéristiques et leurs avantages, la présente invention atteint les objectifs qu'elle s'était fixés. En particulier, elle propose un système de protection qui soit adaptable aux problématiques de tout type de véhicules (spatiaux, terrestre,...), résistant aux forces de compression s'exerçant sur lui, sans pénalisation du poids du véhicule. L'invention permet également avantageusement d'améliorer le niveau de protection des passagers.

## Revendications

1. Système de protection (15) comportant un coussin gonflable (16) relié à des moyens de gonflage aptes et destinés à être activés pour gonfler ledit coussin gonflable lors et/ou en prévision d'un impact,
le coussin gonflable (16) présentant une forme générale annulaire dans un état gonflé,
**caractérisé en ce que** le coussin gonflable (16) présente, selon un plan passant par un axe de révolution dudit coussin gonflable, une section transversale en forme de T dans un état gonflé.

2. Système de protection (15) selon la revendication 1 dans lequel le coussin gonflable (16) est réalisé dans une structure à fils entrecroisés.

3. Système de protection (15) selon l'une quelconque des revendications précédentes comportant une pluralité de coussins gonflables (16) et des éléments de liaison (17), deux coussins gonflables (16) étant reliés par au moins un moyen de liaison (17).

4. Système de protection (15) selon la revendication 3 dans lequel un élément de liaison (17) est un élément de liaison gonflable.

5. Système de protection (15) selon la revendication 4 dans lequel un coussin gonflable (16) et un élément de liaison (17) adjacent présentent chacun un volume interne, lesdits au moins deux volumes internes communiquant entre eux.

6. Système de protection (15) selon la revendication 4 dans lequel tous les coussins gonflables (16) et tous les éléments de liaison (17) présentent chacun un volume interne, tous les volumes communiquant entre eux.

7. Système de protection (15) selon l'une quelconque des revendications 4 ou 5 comportant deux moyens de gonflage configurés pour gonfler de manière indépendantes au moins deux coussins gonflables (16).

8. Système de protection (15) selon l'une quelconque des revendications précédentes dans lequel un coussin gonflable (16) présente un volume interne divisé en deux chambres indépendantes se gonflant/dégonflant sélectivement l'une par rapport à l'autre.

9. Hélicoptère (10) **caractérisé en ce qu'**il comporte au moins un système de protection (15) conforme à l'une quelconque des revendications 1 à 8 s'étendant, à l'état gonflé, depuis une face interne (111) d'une cabine (11).

10. Sonde spatiale (20) **caractérisée en ce qu'**elle comporte au moins un système de protection (15) conforme à l'une quelconque des revendications 1 à 8 s'étendant, à l'état gonflé, depuis une face externe (21).

11. Aéronef (30) **caractérisé en ce qu'**il comporte au moins un système de protection (15) conforme à l'une quelconque des revendications 1 à 8 s'étendant, à l'état gonflé, depuis un radome ou un cône de réacteur.

## Patentansprüche

1. Schutzsystem (15), umfassend einen Airbag (16), der mit Aufblasmitteln verbunden ist, die geeignet und dazu bestimmt sind, aktiviert zu werden, um den Airbag bei einem Aufprall und/oder in Erwartung eines Aufpralls aufzublasen,
wobei der Airbag (16) eine allgemeine ringförmige Form im aufgeblasenen Zustand aufweist,
**dadurch gekennzeichnet, dass** der Airbag (16) entlang einer Ebene, die durch eine Umdrehungsachse des Airbags geht, einen T-förmigen Querschnitt im aufgeblasenen Zustand aufweist.

2. Schutzsystem (15) nach Anspruch 1, bei dem der Airbag (16) aus einer Struktur mit gekreuzten Fäden besteht.

3. Schutzsystem (15) nach einem der vorhergehenden Ansprüche, umfassend eine Vielzahl von Airbags (16) und Verbindungselementen (17), wobei zwei Airbags (16) durch mindestens ein Verbindungselement (17) verbunden sind.

4. Schutzsystem (15) nach Anspruch 3, bei dem ein Verbindungselement (17) ein aufblasbares Verbindungselement ist.

5. Schutzsystem (15) nach Anspruch 4, bei dem ein Airbag (16) und ein angrenzendes Verbindungselement (17) jeweils ein Innenvolumen aufweisen, wobei die mindestens zwei Innenvolumina miteinander in Verbindung stehen.

6. Schutzsystem (15) nach Anspruch 4, bei dem alle Airbags (16) und alle Verbindungselemente (17) jeweils ein Innenvolumen aufweisen, wobei alle Innenvolumina miteinander in Verbindung stehen.

7. Schutzsystem (15) nach einem der Ansprüche 4 oder 5, umfassend zwei Aufblasmittel, die dazu vorgesehen sind, mindestens zwei Airbags (16) unabhängig aufzublasen.

8. Schutzsystem (15) nach einem der vorhergehenden Ansprüche, bei dem ein Airbag (16) ein Innenvolumen aufweist, das in zwei unabhängige Kammern geteilt ist, die sich selektiv in Bezug zueinander aufblasen/bersten.

9. Hubschrauber (10), **dadurch gekennzeichnet, dass** er mindestens ein Schutzsystem (15) nach einem der Ansprüche 1 bis 8 umfasst, das sich im aufgeblasenen Zustand von einer Innenseite (111) einer Kabine (11) aus erstreckt.

10. Raumsonde (20), **dadurch gekennzeichnet, dass** sie mindestens ein Schutzsystem (15) nach einem der Ansprüche 1 bis 8 umfasst, das sich im aufgeblasenen Zustand von der Außenseite (21) aus erstreckt.

11. Flugzeug (30), **dadurch gekennzeichnet, dass** es mindestens ein Schutzsystem (15) nach einem der Ansprüche 1 bis 8 umfasst, das sich im aufgeblasenen Zustand von einem Radom oder einem Reaktorkegel aus erstreckt.

## Claims

1. Protection system (15) comprising an inflatable bag (16) connected to inflation means able and intended to be activated so as to inflate the said inflatable bag in the event of and/or upon the prediction of an impact, the inflatable bag (16) having an annular overall shape when inflated,
**characterized in that** the inflatable bag (16) has, in a plane passing through an axis of revolution of said inflatable bag, a T-shaped cross section when inflated.

2. Protection system (15) according to Claim 1, in which the inflatable bag (16) is made of a structure of intersecting yarns.

3. Protection system (15) according to any one of the preceding claims, comprising a plurality of inflatable bags (16) and connecting elements (17), two inflatable bags (16) being connected by at least one connecting means (17).

4. Protection system (15) according to Claim 3, in which a connecting element (17) is an inflatable connecting element.

5. Protection system (15) according to Claim 4 in which an inflatable bag (16) and an adjacent connecting element (17) each have an internal volume, the said at least two internal volumes communicating with one another.

6. Protection system (15) according to Claim 4 in which all the inflatable bags (16) and all the connecting elements (17) each have an internal volume, all the volumes communicating with one another.

7. Protection system (15) according to either one of Claims 4 and 5 comprising two inflation means configured to inflate at least two inflatable bags (16) independently.

8. Protection system (15) according to any one of the preceding claims in which an inflatable bag (16) has an internal volume divided into two independent chambers that inflate/deflate selectively relative to one another.

9. Helicopter (10) **characterized in that** it comprises at least one protection system (15) according to any one of Claims 1 to 8 extending, when inflated, from an internal face (111) of a cabin (11).

10. Space probe (20), **characterized in that** it comprises at least one protection system (15) according to any one of Claims 1 to 8 extending, when inflated, from an external face (21).

11. Aircraft (30), **characterized in that** it comprises at least one protection system (15) according to any one of Claims 1 to 8 extending, when inflated, from a radome or from an engine cone.
